# EUROPÄISCHE PATENTSCHRIFT

(11) **EP 3 774 142 B1**
(45) Veröffentlichungstag und Bekanntmachung des Hinweises auf die Patenterteilung: **06.04.2022**
(21) Anmeldenummer: 19705759.9
(22) Anmeldetag: 15.02.2019
(51) Int. Cl.: B23B 31/02, B23B 31/19, B23B 31/40

(54) **SPANNVORRICHTUNG, WERKZEUGMASCHINE UND VERFAHREN ZUM INTELLIGENTEN SPANNEN EINES WERKSTÜCKES**
CLAMPING DEVICE, MACHINE TOOL, AND METHOD FOR INTELLIGENTLY CLAMPING A WORKPIECE
DISPOSITIF DE SERRAGE, MACHINE-OUTIL ET PROCÉDÉ DE SERRAGE INTELLIGENT D'UNE PIÈCE

(30) Priorität: 29.03.2018 DE 102018107670
(43) Veröffentlichungstag der Anmeldung: 17.02.2021
(73) Patentinhaber: Sterman Technische Systeme GmbH, 78112 St. Georgen (DE)
(72) Erfinder: GROSS, Tobias, 78052 Villingen-Schwenningen (DE); ZINAPOLD, Mike, 78147 Vöhrenbach (DE)
(74) Vertreter: Westphal, Mussgnug & Partner Patentanwälte mbB
(86) Internationale Anmeldenummer: PCT/EP2019/053870
(87) Internationale Veröffentlichungsnummer: WO 2019/185239

(56) Entgegenhaltungen:
- EP-A1- 1 882 548
- EP-A2- 1 052 046
- JP-A- H05 245 708
- US-A- 1 412 170

## Beschreibung

Die vorliegende Erfindung betrifft eine spindelgetriebene Spannvorrichtung mit den Merkmalen des Anspruchs 1, eine Werkzeugmaschine gemäß Anspruch 13 sowie ein Verfahren zum intelligenten Spannen eines Werkstückes mit den Merkmalen des Anspruchs 16, das ein intelligentes Spannen des Werkstücks in einem Werkstückaufnahmebereich der spindelgetriebenen Spannvorrichtung der Werkzeugmaschine ermöglicht.

Dokument US 1 412 170 A offenbart eine Spannvorrichtung gemäß dem Oberbegriff des Anspruchs 1.

Spannvorrichtungen sind in unterschiedlichen Ausgestaltungen aus dem Stand der Technik bekannt und umfassen typischerweise einen Grundkörper mit einem Werkstückaufnahmebereich. In den Werkstückaufnahmebereich eingesetzte Werkstücke werden mittels eines oder mehrerer Spannmittel mit dem Grundkörper verspannt und können anschließend durch die Werkzeugmaschine, beispielsweise eine Drehmaschine, eine Schleifmaschine oder eine Messmaschine bearbeitet werden. Die Spannmittel können auch eine Spanneinheit sein. Im industriellen Einsatz von Spannvorrichtungen stellt das Ausrichten des Werkstücks in dem Werkstückaufnahmebereich einer Spannvorrichtung eine große Herausforderung dar, da zur präzisen Bearbeitung des Werkstückes dieses in eine vorbestimmte, zumeist eine zu einer Spindelachse exakte koaxiale Ausrichtung des Werkstücks erforderlich ist, welches jedoch nur in einem bestimmten Toleranzbereich möglich ist. Ferner können aus dem Stand der Technik bekannte Spannvorrichtungen mögliche Lagetoleranzen nicht beliebig durch eine Steuerung einstellen oder gezielt das Werkstück in dem Werkstückaufnahmebereich exzentrisch positionieren um besondere Werkstückeigenschaften zu erzeugen.

Es ist daher die Aufgabe der vorliegenden Erfindung, eine Spannvorrichtung zur Verfügung zu stellen, die die aus dem Stand der Technik bekannten Nachteile beseitigt und es ermöglicht, Werkstücke nach dem Einsetzen in den Werkstückaufnahmebereich auszurichten bzw. in einer vorgegebenen Lage innerhalb des Werkstückaufnahmebereichs zu positionieren. Darüber hinaus soll eine derartige Spannvorrichtung das Ausrichten und/oder Positionieren des Werkstückes in dem Werkstückaufnahmebereich in kürzester Zeit erledigen, um die Stand-/ Taktzeiten nicht unnötig zu verlängern und den Einsatz einer solchen Spannvorrichtung besonders wirtschaftlich zu gestalten. Auch ist es die Aufgabe der vorliegenden Erfindung, eine Werkzeugmaschine mit einer solchen Spannvorrichtung sowie ein Verfahren zum Einspannen eines Werkstücks vorzuschlagen.

Die Lösung dieser Aufgaben erfolgt durch eine Spannvorrichtung mit den Merkmalen des Patentanspruchs 1 sowie durch eine Werkzeugmaschine mit den Merkmalen des Patentanspruchs 13 und ein Verfahren mit den Merkmalen des Patentanspruchs 16.

Weitere vorteilhafte Ausgestaltungen der Erfindung sind Bestandteil der Unteransprüche.

Die erfindungsgemäße spindelgetriebene Spannvorrichtung einer Werkzeugmaschine mit den Merkmalen des Anspruchs 1 umfasst einen Grundkörper, der entlang einer Spindelachse angeordnet ist und auf einer ersten Seite ein Kopplungselement aufweist, durch das die Spannvorrichtung mit einer angetriebenen Spindel einer Werkzeugmaschine koppelbar ist und auf einer zweiten Seite einen Werkstückaufnahmebereich und mindestens ein betätigbares Spannmittel umfasst, durch das ein Werkstück in mindestens einer Spannrichtung in dem Werkstückaufnahmebereich verspannt werden kann. Erfindungsgemäß ist darüber hinaus vorgesehen, dass der Grundkörper mindestens einen Piezoaktor aufweist, dass der mindestens eine Piezoaktor jeweils eine Wirkrichtung aufweist, die auf den Werkstückaufnahmebereich gerichtet ist und wobei die Spannrichtung des mindestens einen betätigbaren Spannmittels im Wesentlichen senkrecht zu der Wirkrichtung des mindestens einen Piezoaktors ausgerichtet ist. Piezoaktoren sind allgemein aus dem Stand der Technik bekannt und umfassen einen Aktor, der typischerweise aus keramischen Bestandteilen gebildet ist und in einer Aktorrichtung verstellbar ist. Die Aktorrichtung kann entweder unmittelbar die Wirkrichtung sein oder mittels einer Umlenkeinrichtung in eine beliebige Wirkrichtung gewandelt werden. Piezoaktoren weisen eine hohe Dynamik auf, wodurch besonders schnell eine Zustellung in die Wirkrichtung erfolgen kann und eine definierbare Kraft durch den mindestens einen Piezoaktor in Wirkrichtung auf das Werkstück aufgebracht werden kann. Durch das Aufbringen einer Kraft auf das Werkstück kann das Werkstück in dem Werkstückaufnahmebereich der Spannvorrichtung verschoben werden, um aktiv eine Veränderung der Werkstücklage in dem Werkstückaufnahmebereich, insbesondere vor dem Verspannen des Werkstückes, vorzunehmen. Die Spindelachse der Spannvorrichtung entspricht bevorzugt der Drehachse der angetriebenen Spindel der Werkzeugmaschine. Die Spannmittel können eine Spanneinheit bilden und können darüber hinaus axial und/oder radial zustellbar sein und das Werkstück somit axial und/oder radial in dem Werkstückaufnahmebereich verspannen. Derartige Spannmittel sind hinreichend aus dem Stand der Technik bekannt.

Weiterhin hat es sich als vorteilhaft erwiesen, wenn der Piezoaktor einen Tastkopf aufweist und dass der Tastkopf in der Wirkrichtung durch den Piezoaktor zustellbar ist und eine Position des Piezoaktors und/oder des Tastkopfes des Piezoaktors auslesbar ist. Der Tastkopf ist auf der dem Werkstückaufnahmebereich zugewandten Seite der Spannvorrichung angeordnet und eingerichtet, auf das Werkstück in dem Werkstückaufnahmebereich einzuwirken. Dementsprechend kann der Tastkopf das Werkstück antasten und durch das Auslesen der Position des Aktors und/oder des Tastkopfes die Lage des Werkstücks in dem Werkstückaufnahmebereich bestimmen. Weiterhin bevorzugt kann gezielt eine definierte Kraft mittels des Tastkopfes auf das Werkstück aufgebracht werden, oder das Werkstück in dem Werkstückaufnahmebereich mittels des Tastkopfes verschoben werden, um eine Veränderung der Werkstücklage in dem Werkstückaufnahmebereich vorzunehmen.

Gemäß einer weiteren vorteilhaften Ausgestaltung der Erfindung ist vorgesehen, dass die jeweilige Wirkrichtung des mindestens einen Piezoaktors senkrecht zu der Spindelachse angeordnet ist, und dass die Wirkrichtung auf die Spindelachse gerichtet oder abgerichtet ist. Dementsprechend ist die Spannrichtung des mindestens einen Spannmittels parallel zu der Spindelachse ausgerichtet. Eine derartig ausgebildete Spannvorrichtung kann bevorzugt für eine Bearbeitung einer Innenfläche oder einer Außenfläche eines ringförmigen Werkstücks verwendet werden. Die Wirkrichtung des mindestens einen Piezoaktors kann beispielsweise bei der Spannvorrichtung zur Bearbeitung der Innenfläche des Werkstückes auf die Spindelachse gerichtet sein, währenddessen die Wirkrichtung des mindestens einen Piezoaktors bei der Spannvorrichtung zur Bearbeitung der Außenfläche des Werkstücks radial von der Spindelachse weg weist.

Darüber hinaus ist es weiterhin besonders vorteilhaft, wenn mindestens zwei, vorzugsweise drei Piezoaktoren umfangssymmetrisch um die Spindelachse angeordnet sind. Die Anzahl der verwendeten Piezoaktoren kann jedoch beliebig hoch sein. Bei der besonders bevorzugten Ausgestaltung mit einer Vielzahl von umfangssymmetrisch angeordneten Piezoaktoren kann die Position des Werkstückes in dem Werkstückaufnahmebereich vereinfacht erfasst werden, in dem der Relativwinkel zwischen dem Werkstück und der Spannvorrichtung durch eine Drehung um die Spindelachse verändert ist. Die Werkstücklage des Werkstücks in dem Werkstückaufnahmebereich der Spannvorrichtung kann durch ein Zustellen der Piezoaktoren relativ zu der Spindelachse aktiv eingestellt werden.

Es hat sich als weiterhin vorteilhaft erwiesen, wenn der Grundkörper wenigstens eine Schnittstelle aufweist, durch die Steuerbefehle für den mindestens einen Piezoaktor empfangen und die Position des wenigstens einen Piezoaktors gesendet werden kann.

Eine weitere vorteilhafte Ausgestaltung der vorliegenden Erfindung sieht vor, dass mindestens zwei Spannmittel vorgesehen sind, die umfangssymmetrisch um die Spindelachse angeordnet sind und das Werkstück in dem Werkstückaufnahmebereich arretieren. Die Spannmittel sind entweder durch einzelne Zylinder zustellbar oder mittels eines geeigneten Synchronisationsmittels synchron zustellbar, wodurch eine möglichst homogene Werkstückspannung beim Verspannen mittels der Spannmittel bewerkstelligt ist.

Eine besonders bevorzugte Ausgestaltung der vorliegenden Erfindung sieht vor, dass die Spannrichtung des jeweiligen Spannmittels parallel, insbesondere parallel und beabstandet zu der Längsachse ausgerichtet ist. Die Spannkraft der Spannmittel ist also eine Axialkraft. Die Spannrichtung ist der Vektor der Zustellbewegung des Spannmittels. Ist beispielsweise nur ein Spannmittel in Form eines entlang der Spindelachse beweglichen Werkstückanschlages vorgesehen, ist die Spannrichtung koaxial zu der Spindelachse ausgerichtet. Sind beispielsweise drei zustellbare Spannmittel vorgesehen, sind die Spannrichtungen bzw. die Vektoren der Spannrichtung parallel und beabstandet zu der Spindelachse angeordnet, wobei besonders bevorzugt die Spannrichtungen umfangssymmetrisch um die Spindelachse positioniert sind.

Eine weitere vorteilhafte Ausgestaltung der Erfindung sieht vor, dass das mindestens eine Spannmittel einen Schwenkbolzen umfasst, welcher um eine Schwenkachse schwenkbar ist, die parallel und beabstandet zu der Spindelachse angeordnet ist. Die Schwenkbolzen können als Planspannelemente ausgebildet sein und können weiterhin mit einem als Spannmittel ausgebildeten Werkstückanschlag zusammenwirken, sodass das Werkstück durch den Werkstückanschlag in eine Spannrichtung gegen die Schwenkbolzen arretiert werden kann. Besonders bevorzugt sind mehrere Schwenkbolzen um die Spindelachse angeordnet, welche besonders bevorzugt mittels einer Synchronisationseinrichtung gekoppelt sind, wodurch die Schwenkbewegung um die Schwenkachse und/oder die Bewegung der Schwenkbolzen in die Spannrichtung synchronisiert sind.

Eine besonders vorteilhafte Ausgestaltung der vorliegenden Erfindung sieht vor, dass der Piezoaktor eine Aktorrichtung aufweist und dass die Aktorrichtung in einem Winkel von mindestens 45°, vorzugsweise 90° oder weiter bevorzugt von 180° zu der Wirkrichtung ausgerichtet ist. Die Zustellbewegung des Piezoaktors wird mittels einer mechanischen Umlenkungseinrichtung von der Aktorrichtung in eine Wirkrichtung gewandelt. Die Aktorrichtung kann jedoch auch unmittelbar der Wirkrichtung entsprechen.

Ein weiterer Aspekt der vorliegenden Erfindung betrifft eine Werkzeugmaschine, insbesondere eine Drehmaschine, eine Schleifmaschine oder eine Messmaschine mit einer durch die Spindel der Werkzeugmaschine angetriebenen Spannvorrichtung, wobei die Spannvorrichtung einen Grundkörper aufweist, der entlang einer Spindelachse angeordnet ist und auf der ersten Seite ein Kopplungselement aufweist, durch welches die Spannvorrichtung mit der Spindel der Werkzeugmaschine gekoppelt ist und eine zweite Seite mit einem Werkstückaufnahmebereich und mit mindestens einem betätigbaren Spannmittel, durch das ein Werkstück in der Spannrichtung in dem Werkstückaufnahmebereich verspannt werden kann, wobei der Grundkörper mindestens einen Piezoaktor aufweist, wobei der Piezoaktor jeweils eine Wirkrichtung aufweist, die auf den Werkstückaufnahmebereich gerichtet ist und wobei die Spannmittel der Spannvorrichtung senkrecht zu der Wirkrichtung des mindestens einen Piezoaktors ausgerichtet sind.

Besonders bevorzugt umfasst die Werkzeugmaschine eine Steuerung, durch die der mindestens eine Piezoaktor der Spannvorrichtung in Wirkrichtung steuerbar ist und durch die die Position des mindestens einen Piezoaktors ausgelesen werden kann. Die Steuerung der Werkzeugmaschine kann mit dem mindestens einen Piezoaktor interagieren, wodurch ein durch die Steuerung kontrolliertes Bewegungsverhalten des mindestens einen Piezoaktors und der Spindel der Werkzeugmaschine bzw. der Spannvorrichtung ermöglicht ist. Insbesondere kann durch eine Drehung der Spannvorrichtung um die Spindelachse und ein sich daran anschließendes Antasten des Werkstücks in dem Werkstückaufnahmebereich eine Vermessung des Werkstücks über seinen gesamten Umfang, also um 360°, erfolgen. Dadurch kann nicht nur die punktuelle Werkstücklage des Werkstücks in dem Werkstückaufnahmebereich bestimmt werden, sondern eine exakte Formbestimmung des Werkstücks erfolgen, wodurch bei einem nachgelagerten Bearbeitungsschritt, beispielsweise Drehen oder Schleifen, Form- und Lagetoleranzen bestmöglich durch eine durch die Piezoaktoren durchgeführte Werkstücklagekorrektur gestaltet werden können.

Weiterhin ist es besonders vorteilhaft, wenn die Werkzeugmaschine und die Spannvorrichtung Mittel zum Übertragen elektrischer Energie von der Werkzeugmaschine zu der Spannvorrichtung aufweisen und weiter bevorzugt, wenn die Werkzeugmaschine eine Schnittstelle umfasst, die eingerichtet ist, mit der Schnittstelle der Spannvorrichtung, bevorzugt drahtlos, zu kommunizieren.

Ein dritter Aspekt der vorliegenden Erfindung betrifft ein Verfahren zum Spannen eines Werkstücks mit einer Spannvorrichtung nach einem der Ansprüche 1 bis 12. Das erfindungsgemäße Verfahren ist dabei gekennzeichnet durch folgende Verfahrensschritte:
- Positionieren des Werkstücks in dem Werkstückaufnahmebereich der Spannvorrichtung,
- Antasten des Werkstücks mittels des mindestens einen Piezoaktors durch ein Zustellen des Piezoaktors in der Wirkrichtung auf das Werkstück,
- Erfassen der Position des mindestens einen Piezoaktors und Bestimmen der Werkstücklage mittels der Position des mindestens einen Piezoaktors, und
- Verspannen des Werkstücks in dem Werkstückaufnahmebereich durch das mindestens eine Spannmittel.

Besonders vorteilhaft ist bei der Durchführung des erfindungsgemäßen Verfahrens, wenn die Werkstücklage durch ein wiederholtes Antasten mittels des mindestens einen Piezoaktors in Wirkrichtung erfasst wird, wobei die Winkellage zwischen dem Werkstück und der Spannvorrichtung durch ein Verdrehen um die Spindelachse nach jedem Antasten verändert ist. Insbesondere ist es vorteilhaft, wenn die Winkellage zwischen dem Werkstück und der Spannvorrichtung durch eine Drehung der Spannvorrichtung die Spindelachse durch die Werkzeugmaschine erfolgt. Weiterhin ist es besonders vorteilhaft, wenn dabei die Spannvorrichtung mindestens zwei, weiter bevorzugt drei Piezoaktoren aufweist, wodurch die Werkstücklage und/oder Werkstückform besonders schnell und effizient erfasst werden kann.

Es hat sich weiterhin als vorteilhaft erwiesen, wenn nach dem Erfassen der Werkstücklage durch ein Zustellen des mindestens einen Piezoaktors die Werkstücklage des Werkstücks in dem Werkstückaufnahmebereich verändert wird. Dadurch kann gezielt beispielsweise die Werkstücklage des Werkstücks zu der Spindelachse verändert und Einfluss auf die Form- und Lagetoleranz genommen werden. Beispielsweise ist es möglich, das Werkstück exakt koaxial zu der Spindelachse auszurichten, oder unter Berücksichtigung der Lage- und Formtoleranzen eine gezielte exzentrische Ausrichtung zu der Spindelachse einzustellen.

Eine vorteilhafte Weiterbildung des erfindungsgemäßen Verfahrens sieht vor, dass das Werkstück in dem Werkstückaufnahmebereich durch den mindestens einen Piezoaktor elastisch und/oder plastisch verformt wird. Bevorzugt wird das Werkstück vor dem Verspannen durch den mindestens einen Piezoaktor verformt, wodurch die eingebrachten Verformungen in dem verspannten Zustand des Werkstücks aufrechterhalten bzw. fixiert werden. Die durch den mindestens einen Piezoaktor erzeugten Verformungen können maßgeblich auf die Form des Werkstücks Einfluss nehmen wodurch beispielsweise gezielt definierte Toleranzen bei der Bearbeitung erzeugt werden können.

Gemäß einer vorteilhaften Weiterbildung des erfindungsgemäßen Verfahrens wird vorgesehen, dass die Werkstücklage beim Verspannen oder bei einer auf das Verspannen folgenden Bearbeitung überwacht bzw. kontrolliert wird. Beim Verspannen des Werkstücks können mittels des mindestens einen Piezoaktors Verschiebungen und/oder elastische oder plastische Deformationen des Bauteils erfasst werden. Darüber hinaus kann der mindestens eine Piezoaktor während der Bearbeitung des Werkstücks Spannungsveränderungen und Werkstücklageveränderungen überwachen bzw. kontrollieren. Hierzu werden die Piezoaktoren wiederholt abgefragt, wodurch ein Condition Monitoring bei der Bearbeitung des Werkstücks realisiert wird.

Auch hat es sich als vorteilhaft erwiesen, wenn nach dem Verspannen durch das mindestens eine Spannmittel der mindestens eine Piezoaktor in eine Ausgangsstellung verfahren wird, wodurch der mindestens eine Piezoaktor bei der Bearbeitung des Werkstücks vor äußeren Krafteinwirkungen geschützt ist.

Nachfolgend wird unter Bezugnahme auf die begleitenden Figuren ein erfindungsgemäßes Ausführungsbeispiel sowie das erfindungsgemäße Verfahren zum intelligenten Spannen eines Werkstücks ausführlich erläutert. Es zeigen:
- Figur 1: eine Draufsicht auf eine erfindungsgemäße Spannvorrichtung mit einem Werkstückaufnahmebereich, in dem ein Werkstück mittels Spannmittel umfangssymmetrisch in einer Spannrichtung zu Bearbeitungszwecken gespannt gehalten ist,
- Figur 2: eine teilweise geschnittene Darstellung der Spannvorrichtung gemäß Figur 1 mit drei Piezoaktoren, die jeweils eine auf den Werkstückaufnahmebereich und auf eine Außenfläche des Werkstücks gerichtete Wirkrichtung aufweisen, die senkrecht zu der Spannrichtung ausgerichtet ist, und
- Figur 3: ein vereinfachter schematischer Ablauf des erfindungsgemäßen intelligenten Verfahrens zum Spannen des Werkstücks mittels einer Spannvorrichtung gemäß den Figuren 1 und 2.

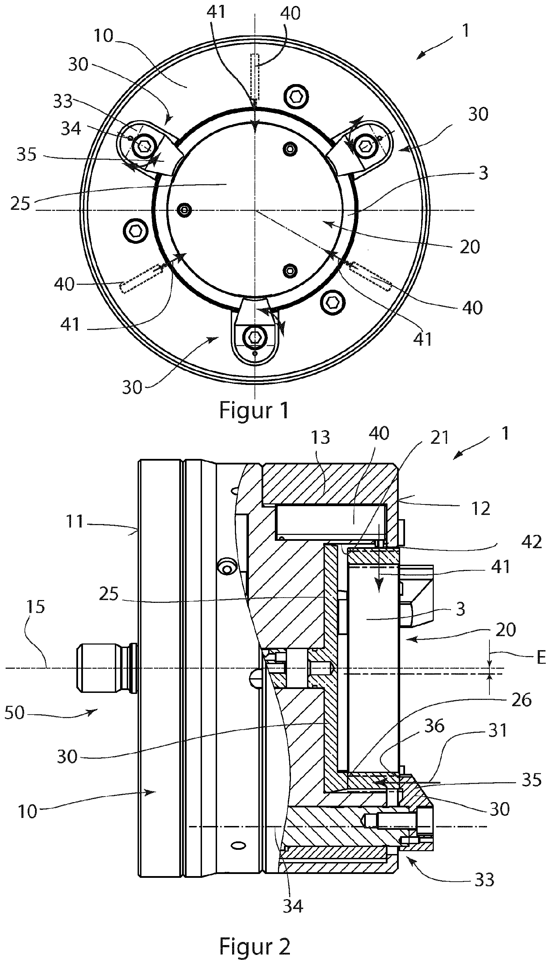

Figur 1 ist eine Spannvorrichtung 1 einer nicht dargestellten Werkzeugmaschine 2 zu entnehmen, dass eingerichtet ist, ein Werkstück 3 zu Bearbeitungszwecken in einem Werkstückaufnahmebereich 20 zu arretiert.

Das Werkstück 3 in dem dargestellten Ausführungsbeispiel der Spannvorrichtung 1 ist ein ringförmiger Körper mit zwei Mantelflächen und zwei Stirnflächen, wobei die äußere Mantelfläche eine Außenfläche und die innere Mantelfläche eine Innenfläche bildet. Das Werkstück 3 ist in den Figuren1 und 2 zur Bearbeitung der Innenfläche in der Spannvorrichtung 1 eingespannt.

Die Spannvorrichtung 1 umfasst einen Grundkörper 10, der entlang einer Spindelachse 15 im Wesentlichen rotationssymmetrisch ausgebildet ist und auf zwei gegenüberliegenden Seiten eine erste Seite 11 und eine zweite Seite 12 aufweist. Die erste Seite 11 ist auf der der (nicht dargestellten) Werkzeugmaschine 2 zugewandten Seite des Grundkörpers 10 angeordnet, währenddessen die zweite Seite 12 auf der von der (nicht dargestellten) Werkzeugmaschine 2 abgewandten Seite angeordnet ist.

Auf der ersten Seite 11 ist ein Kopplungselement 50 angeordnet, durch das die Spannvorrichtung 1 in der Spindelachse 15 koaxial an einer angetriebenen (nicht dargestellten) Spindel der Werkzeugmaschine 2 befestigt werden kann. Zum Bearbeiten der Innenseite des Werkstücks 3 wird die Spannvorrichtung 1 in eine Rotationsbewegung um die Spindelachse 15 durch die Spindel versetzt. Die Werkzeugmaschine 2 kann beispielsweise eine Drehmaschine oder eine Schleifmaschine sein.

Der Werkstückaufnahmebereich 20 befindet sich koaxial zu der Spindelachse 15 und wird durch eine Ausnehmung 21 gebildet, in die das Werkstück 3 zu Bearbeitungszwecken bereichsweise oder vollständig eingesetzt werden kann. Darüber hinaus umfasst die Spannvorrichtung 1 einen Werkstückanschlag 25, der auf der der Werkzeugmaschine 2 zugewandten Seite des Werkstückaufnahmebereichs 20 angeordnet ist und eine oder mehrere Werkstückauflageflächen 26 für das Werkstück 3 aufweist. Die Werkstückauflageflächen 26 stehen von einer Ebene, die parallel zu der ersten Seite 11 oder der zweiten Seite 12 ausgerichtet ist von dem Werkstückanschlag 25 in der Spindelachse 15 in Richtung der zweiten Seite 12 ab.

Die Spannvorrichtung 1 umfasst, wie Figur 1 weiter zu entnehmen ist, drei Spannmittel 30, die um die Spindelachse 15 umfangssymmetrisch in einer Winkelteilung von 120° angeordnet sind. Die Spannmittel 30 sind im vorliegenden Ausführungsbeispiel als L-förmige Schwenkbolzen 33 mit einem Spannelement 35 ausgebildet und weisen jeweils eine Schwenkachse 34 auf, um die der Schwenkbolzen 33 drehbar ist. Das Spannelement 35 steht radial von der Schwenkachse 34 des Schwenkbolzens 33 ab. Wie aus der Schnittdarstellung in Figur 2 ersichtlich, umfasst das Spannelement 35 eine Spannfläche 36, die senkrecht zu der Spindelachse 15 ausgerichtet ist, so dass die Spannrichtung parallel zu der Spindelachse 15 verläuft. Das Werkstück 3 wird somit auf den zwei gegenüberliegenden Stirnseiten zwischen den Spannflächen 36 der Spannelemente 35, den Schwenkbolzen 33 und den Werkstückauflageflächen 26 des Werkstückanschlags 25 verspannt. Die Spannrichtungen 31 sind folglich parallel zu der Spindelachse 15.

Die Schwenkbolzen 33 sind mittels einer (nicht dargestellten) Synchronisationseinrichtung 39 gekoppelt, wodurch die Schwenkbolzen 33 synchron um die Schwenkachse 34 gedreht werden können. Durch ein Schwenken der Schwenkbolzen 33 um die Schwenkachse 34 kann der Werkstückaufnahmebereich 20 freigegeben werden, so dass das zu bearbeitende Werkstück 3 in die Ausnehmung 21 eingesetzt werden kann. Typischerweise sind die Schwenkbolzen 33 in einem Winkel von ca. 90° um die Schwenkachse 34 von einer geöffneten Stellung in eine Spannstellung drehbar. Die entsprechenden Schwenkrichtungen sind in der Figur 1 mittels Doppelpfeilen um die Schwenkachse 34 dargestellt.

Das Verspannen des Werkstücks 3 in dem Werkstückaufnahmebereich 20 kann entweder durch ein Zustellen des Werkstückanschlages 25 in der Spindelachse 15 erfolgen oder durch eine Zustellung der Schwenkbolzen 33 entlang der Schwenkachse 34. Entweder kann der Werkstückanschlag 25 entlang der Spindelachse 15 bewegt werden oder die Spannflächen 36 der Spannelemente 35. Eine kombinierte Bewegung des Werkstückanschlages 25 und der Schwenkbolzen 33 ist ebenfalls möglich.

Die Zustellung des Werkstückanschlages 25 und/oder der Schwenkbolzen 33 kann mittels einer (nicht dargestellten) Zugstange der Werkzeugmaschine 2 erfolgen, oder durch geeignete Betätigungsmittel, welche elektrisch, elektrohydraulisch, hydraulisch, pneumatisch oder mechanisch sein können.

Insbesondere der teilweise geschnittenen Darstellung in Figur 2 ist zu entnehmen, dass die Werkstückauflageflächen 26 und die Spannflächen 36 in der gleichen Winkelteilung angeordnet sind, so dass die Werkstückauflageflächen 26 und die Spannfläche 36 in der Spannstellung der Schwenkbolzen 33 zueinander fluchtend angeordnet sind.

Weiterhin ist Figur 1 zu entnehmen, dass um die Spindelachse 15 umfangssymmetrisch drei Piezoaktoren 40 angeordnet sind. Die Piezoaktoren 40 sind im Wesentlichen auf der zweiten Seite 12 des Grundkörpers 10 auf der dem Werkstückaufnahmebereich 20 zugewandten Seite angeordnet und durch einen Deckel 13 verdeckt an dem Grundkörper 10 fest angeordnet. Der Deckel 13 schützt die Piezoaktoren 40 vor äußeren Einwirkungen.

Die Piezoaktoren 40 umfassen einen elektrisch betätigbaren und zustellbaren Aktor mit einer Aktorrichtung, wobei der Aktor mechanisch mit einem Tastkopf 42 gekoppelt ist. Der Tastkopf 42 kann durch den Aktor entlang einer Wirkrichtung 41 bidirektional zugestellt werden. Die Tastköpfe 42 der Piezoaktoren 40 sind radial um die Ausnehmung 21 verteilt und können durch den Aktor aus einer Ausgangsstellung in die Wirkrichtung 41 zugestellt werden, bis die Tastköpfe 42 in die Ausnehmung 21 ragen und in Wirkkontakt mit der Außenfläche des Werkstücks 3 gelangen.

Die Wirkrichtung 41 des Piezoaktors 40 ist auf die Spindelachse 15 gerichtet und schneidet diese in einem rechten Winkel. Die Wirkrichtungen 41 der Piezoaktoren 40 sind daher auch senkrecht zu der Spannrichtung 31 der Spannmittel 30, wodurch sich der Vorteil ergibt, dass die Piezoaktoren 40 im gespannten Zustand des Werkstücks 3 in dem Werkstückaufnahmebereich 20 nicht durch Spannkräfte unnötig belastet werden. Eine Abweichung von der exakt senkrechten Ausrichtung der Spannrichtung 31 zu der Wirkrichtung 41 der Piezoaktoren 40 ist möglich, insbesondere bei Spannvorrichtungen 1, deren Spannmittel 30 weder eine reine axiale noch eine reine radiale Zustellbewegung beim Verspannen des Werkstücks 3 ausweisen, sondern eine Schwenkbewegung, durch die beispielsweise neben einer reinen radialen Verspannung ein Axialanzug bewerkstelligt wird. Eine im Wesentlichen senkrechte Ausrichtung umfasst eine Toleranz von ±5°, in Ausnahmefällen von ±15° und mehr.

Der jeweilige Tastkopf 42 des jeweiligen Piezoaktors 40 kann in der Wirkrichtung 41 auf das Werkstück 3 zugestellt werden und in Wirkrichtung 41 eine Kraft, vorliegend eine Radialkraft, auf das Werkstück 3 ausüben. Durch eine geeignete Steuerung bzw. Regelung der Piezoaktoren 40 wird die Position des jeweiligen Piezoaktors 40 bzw. des Tastkopfs 42 erfasst und es kann eine Kraft definiert werden, mit welcher der jeweilige Piezoaktor 40 auf das Werkstück 3 drückt.

Die Spannvorrichtung 1 und die Werkzeugmaschine 2 weisen (nicht dargestellte) Mittel zum Übertragen elektrischer Energie von der Werkzeugmaschine 2 zu der Spannvorrichtung 1 auf. Weiterhin weisen die Spannvorrichtung 1 und die Werkzeugmaschine 2 (nicht dargestellte) Schnittstellen auf, die es einer Steuerung, vorzugsweise der Steuerung der Werkzeugmaschine 2, ermöglichen, mit den Piezoaktoren 40 der Spannvorrichtung 1 zu kommunizieren und diese anzusteuern. Die Steuerung der Spanvorrichtung 1 kann jedoch auch von einer externen Steuerung unabhängig von der Maschinensteuerung erfolgen.

Die Steuerung der Werkzeugmaschine 2 kann die Position der Piezoaktoren 40 bzw. der Tastköpfe 42 auslesen und einstellen, sowie die durch die Piezoaktoren 40 bzw. die Tastköpfe 42 auf das Werkstück 3 ausgeübte Kraft einstellen. Durch eine gezielte Ansteuerung der Piezoaktoren 40 kann das Werkstück 3 in dem Werkstückaufnahmebereich 20 eine Werkstücklagekorrektur erfahren. Durch ein Zustellen der Tastköpfe 42 der Piezoaktoren 40 kann das Werkstück 3 in einem nicht durch die Spannmittel 30 verspannten Zustand des Werkstücks 3 um ein Maß E relativ zu der Spindelachse 15 verschoben werden. Die Werkstücklage des Werkstücks 3 kann beliebig in dem Werkstückaufnahmebereich 20 positioniert werden und anschließend durch ein Verspannen mittels der Spannmittel 30 zu Bearbeitungszeiten in dieser Position fixiert werden.

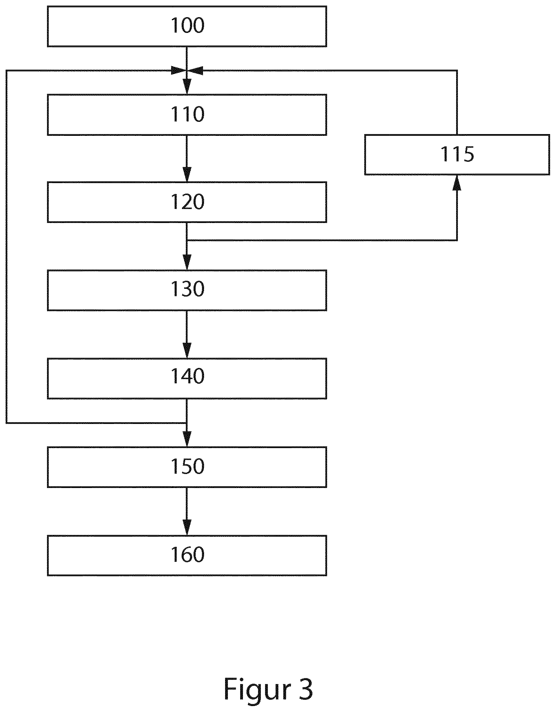

Ein Verfahren zum intelligenten Spannen eines Werkstücks 3 in der Spannvorrichtung 1 gemäß den Figuren 1 und 2 ist schematisch in Figur 3 dargestellt.

In einem ersten Verfahrensschritt 100 wird das Werkstück 3 in dem Werkstückaufnahmebereich 20 positioniert. Besonders bevorzugt ist dabei, wenn die Spindelachse 15 vertikal ausgerichtet ist. Das Werkstück 3 kann durch eine Aufnahmebewegung in der Spindelachse 15 in den Werkstückaufnahmebereich 20 eingelegt werden und verbleibt sodann in dieser Lage unverändert auf dem Werkstückanschlag 25. Alternativ hierzu kann das Werkstück in den Werkstückaufnahmebereich 20 eingesetzt werden, und durch ein Schwenken aus der geöffneten Stellung der Schwenkbolzen 33 in die Spannstellung der Schwenkbolzen 33, dargestellt in Figur 1 und 2, umgriffen und gehalten werden.

In einem darauf folgenden Verfahrensschritte 110 wird das Werkstück durch die Piezoaktoren 40 angetastet. Hierzu werden die Piezoaktoren 40 bzw. die Tastköpfe 42 der Piezoaktoren 40 aus einer Ausgangstellung in die Wirkrichtung 41 zugestellt, bis die Tastköpfe 42 in die Ausnehmung 21 des Werkstückaufnahmebereichs 20 ragen und in einen Wirkkontakt mit der Außenfläche des Werkstücks 3 treten. Der jeweilige Tastkopf 42 wird dabei durch den Aktor des Piezoaktors 40 so lange zugestellt, bis alle Tastköpfe 42 jeweils eine vordefinierte Kraft auf das Werkstück 3 ausüben. Die Kraft eines jeden Aktors kann dabei individuell definiert sein. Das Werkstück 3 ist erst dann angetastet, wenn alle Piezoaktoren 40 in Wirkkontakt zu dem Werkstück 3 stehen und eine Kraft auf das Werkstück 3 ausüben.

In einem darauf folgenden Verfahrensschritt 120 wird die Position der Piezoaktoren 40 bestimmt und auf der Grundlage der Positionen der Piezoaktoren 40 bzw. deren Tastköpfe 42 eine Werkstücklage in Verfahrensschritt 130 durch die Steuerung der Werkzeugmaschine 2 bestimmt.

Eine auf diese Art beschriebe Erfassung der Werkstücklagerung bildet jedoch nicht die vollständige Werkstücklage ab, da diese in Abhängigkeit von der Form- und Lage des Werkstücks abweichen kann. Daher kann vorgesehen werden, dass das Werkstück 3 durch die Piezoaktoren 40 wiederholt angetastet wird, wobei zwischen Verfahrensschritt 110, dem Antasten, in einem Verfahrensschritt 115 die Winkellage bzw. der Relativwinkel zwischen dem Werkstück 3 und der Spannvorrichtung 1 durch eine Drehung der Spannvorrichtung 1 um die Spindelachse 15 erfolgt. Dadurch können die Werkstücklage sowie die exakte Werkstückform der Außenseite des Werkstücks 3 bestimmt werden.

Nach dem Erfassen der Werkstücklage bzw. der Werkstückform kann in einem weiteren Verfahrensschritt 140 durch ein Zustellen mindestens eines der Piezoaktoren 40 die Werkstücklage relativ zu der Spindelachse 15 um das Maß E verändert werden. Durch ein Wiederholen der Verfahrensschritte 110, 120 und 130 kann die korrigierte Werkstücklage kontrolliert werden und gegebenenfalls durch weiteres Wiederholen des Verfahrensschritts 140 erneut angepasst werden.

Insbesondere soll dieses Verfahren dazu verwendet werden, innerhalb eine Innenseite eines ringförmigen Werkstücks präzise unter Berücksichtigung der Form der Außenfläche zu bearbeiten und Berücksichtigung der Form- und Lagetoleranzen der Außenfläche beispielsweise zu der Außenfläche eine exzentrische oder koaxiale Innenfläche zu erzeugen. Eine Bearbeitung der Planflächen des Werkstücks ist ebenfalls möglich, wenn auch durch die Spannmittel 30 begrenzt. Durch ein Zustellen mindestens eines der Piezoaktoren 40 kann dabei das Werkstück mikrometergenau um ein Maß E in einem Bereich von >1µm bis mindestens ca. >1000µm verschoben werden. Gleiches gilt vice versa für die Bearbeitung von der Außenfläche. Die Zustellbewegung des mindestens einen Piezoaktors 40 kann ebenfalls dazu verwendet werden, das Werkstück 3 gezielt elastisch und/oder plastisch zu verformen. Dadurch kann die Werkstückform oder Toleranzen eingestellt werden, z.B. Rundheit oder Parallelität.

Nach einer entsprechenden Anpassung der Werkstücklage wird das Werkstück 3 zu Bearbeitungszwecken in dem Verfahrensschritt 150 durch das mindestens eine Spannmittel 30 verspannt und die Piezoaktoren 40 in einem letzten Verfahrensschritt 160 in die Ausgangsposition entgegen der Wirkrichtung 41 verfahren. Dort sind die Piezoaktoren 40 vor Krafteinwirkungen, die möglicherweise beim Bearbeiten des Werkstücks 3 entstehen, geschützt.

Die Piezoaktoren 40 können während des Verspannens durch die Spannmittel 30 die Werkstücklage weiterhin überwachen und ggf. plastische oder elastische Deformationen des Bauteils 3 erfassen. Durch eine geeignete Regelung der Spannmittel 30 kann Spannkraft der Spannmittel 30 überwacht und kontrolliert werden, wodurch ein Überschreiten zulässiger Spannkräfte verhindert ist. Weiterhin können die Piezoaktoren 40 bzw. deren Tastköpfe 42 während der Bearbeitung in Wirkkontakt mit dem Werkstück 3 verbleiben. Durch ein wiederholtes Abfragen der Piezoaktoren 40 können Kraftveränderungen bzw. Spannungsveränderungen in dem Werkstück 3 erfasst werden, wodurch ein Condition Monitoring realisiert wird.

### Bezugszeichenliste

- 1: Spannvorrichtung
- 2: Werkzeugmaschine
- 3: Werkstück
- 10: Grundkörper
- 11: erste Seite
- 12: zweite Seite
- 13: Deckel
- 15: Spindelachse
- 20: Werkstückaufnahmebereich
- 21: Ausnehmung
- 25: Werkstückanschlag
- 26: Werkstückauflage
- 30: Spannmittel
- 31: Spannrichtung
- 33: Schwenkbolzen
- 34: Schwenkachse
- 35: Spannelement
- 36: Spannfläche
- 40: Piezoaktor
- 41: Wirkrichtung
- 42: Tastkopf
- 50: Kopplungselement

## Patentansprüche

1. Spannvorrichtung (1) einer spindelgetriebenen Werkzeugmaschine, aufweisend
einen Grundkörper (10), der entlang einer Spindelachse (15) angeordnet ist und auf einer ersten Seite (11) ein Kopplungselement (50) aufweist und eine zweite Seite (12) mit einem Werkstückaufnahmebereich (20), mindestens einem betätigbaren Spannmittel (30), durch das ein Werkstück (3) in mindestens einer Spannrichtung (31) in dem Werkstückaufnahmebereich (20) verspannt werden kann,
**dadurch gekennzeichnet, dass** der Grundkörper (10) mindestens einen Piezoaktor (40) aufweist, dass der Piezoaktor (40) jeweils eine Wirkrichtung (41) aufweist, die auf den Werkstückaufnahmebereich (20) gerichtet ist, und dass die Spannrichtung (31) des mindestens einen Spannmittels (30) senkrecht zu der Wirkrichtung (41) des mindestens einen Piezoaktors (40) ausgerichtet ist.

2. Spannvorrichtung (1) nach Anspruch 1,
**dadurch gekennzeichnet, dass** der mindestens eine Piezoaktor (40) einen Tastkopf (42) aufweist, dass der Tastkopf (42) in die Wirkrichtung (41) durch den Piezoaktor (40) zustellbar ist, und dass die Position des Piezoaktors (40) und/oder des Tastkopfs (42) auslesbar ist.

3. Spannvorrichtung (1) nach Anspruch 1 oder 2,
**dadurch gekennzeichnet, dass** die jeweilige Wirkrichtung (41) des mindestens einen Piezoaktors (40) senkrecht zu der Spindelachse (15) angeordnet ist, und dass die Wirkrichtung (41) die Spindelachse (15) schneidet.

4. Spannvorrichtung (1) nach einem der vorgenannten Ansprüche,
**dadurch gekennzeichnet, dass** die mindestens zwei, vorzugsweise drei, Piezoaktoren (40) umfangssymmetrisch um die Spindelachse (15) angeordnet sind.

5. Spannvorrichtung (1) nach einem der vorgenannten Ansprüche,
**dadurch gekennzeichnet, dass** der Grundkörper (10) eine Schnittstelle aufweist, durch die Steuerbefehle für die Piezoaktoren (40) empfangen werden können und durch die die Position des Piezoaktors (40) gesendet werden kann.

6. Spannvorrichtung (1) nach einem der vorgenannten Ansprüche,
**dad**u**rch gekennzeichnet**, dass die Spannrichtung (31) des mindestens einen Spannmittels (30) parallel zu der Längsachse (15) ausgerichtet ist.

7. Spannvorrichtung (1) nach einem der vorgenannten Ansprüche,
**dadurch gekennzeichnet, dass** mindestens zwei Spannmittel (30) vorgesehen sind, die umfangssymmetrisch um die Spindelachse (15) angeordnet sind.

8. Spannvorrichtung (1) nach einem der vorgenannten Ansprüche,
**dadurch gekennzeichnet, dass** der Werkstückaufnahmebereich (20) für eine Bearbeitung einer Innenseite oder einer Außenseite eines ringförmigen Werkstücks (3) ausgebildet ist.

9. Spannvorrichtung (1) nach einem der vorgenannten Ansprüche,
**dadurch gekennzeichnet, dass** das mindestens eine Spannmittel (30) einen Schwenkbolzen (33) umfasst, welcher um eine Schwenkachse (34) drehbar ist, die parallel und beabstandet zu der Spindelachse (15) angeordnet ist.

10. Spannvorrichtung (1) nach einem der vorgenannten Ansprüche,
**dadurch gekennzeichnet, dass** die Schwenkbolzen (33) mittels einer Synchronisationseinrichtung (39) gekoppelt sind.

11. Spannvorrichtung (1) nach einem der vorgenannten Ansprüche,
**dadurch gekennzeichnet, dass** der Grundkörper (10) einen Werkstückanschlag (25) aufweist, der als Spannmittel (30) ausgebildet ist.

12. Spannvorrichtung (1) nach einem der vorgenannten Ansprüche,
**dadurch gekennzeichnet, dass** der Piezoaktor (40) eine Aktorrichtung (45) aufweist, und dass die Aktorrichtung (45) in einem Winkel von mindestens 45°, vorzugsweise 90° oder 180° zu der Wirkrichtung ausgerichtet ist.

13. Werkzeugmaschine (2), insbesondere Drehmaschine oder Schleifmaschine, mit einer Spannvorrichtung (1) nach einem der vorgenannten Ansprüche.

14. Werkzeugmaschine (2) nach Anspruch 13,
**dadurch gekennzeichnet, dass** die Werkzeugmaschine (2) eine Steuerung umfasst, durch welche die Piezoaktoren (40) der Spannvorrichtung (1) in Wirkrichtung (41) steuerbar sind und die Position der Piezoaktoren (40) ausgelesen werden kann.

15. Werkzeugmaschine nach Anspruch 13,
**dadurch gekennzeichnet, dass** die Werkzeugmaschine (2) und die Spannvorrichtung (1) Mittel zum Übertragen elektrischer Energie von der Werkzeugmaschine (2) zu der Spannvorrichtung (1) aufweisen, und dass die Werkzeugmaschine (2) eine Schnittstelle umfasst, die eingerichtet ist, mit der Schnittstelle der Spannvorrichtung (1) zu kommunizieren.

16. Verfahren zum Spannen eines Werkstückes (3) mit einer Spannvorrichtung (1) nach einem der Ansprüche 1 bis 12, **gekennzeichnet durch** die Verfahrensschritte:
- Positionieren des Werkstückes in dem Werkstückaufnahmebereich (20) der Spannvorrichtung (1),
- Antasten des Werkstücks (3) mittels des mindestens einen Piezoaktors (40),
- Erfassen der Position des mindestens einen Piezoaktors (40) und Bestimmen der Werkstücklage mittels der Position des mindestens einen Piezoaktors (40), und
- Verspannen des Werkstückes (3) in dem Werkstückaufnahmebereich (20) **durch** das mindestens eine Spannmittel (30).

17. Verfahren nach Anspruch 16,
**dadurch gekennzeichnet, dass** die Werkstücklage durch wiederholtes Antasten der Piezoaktoren (40) in Wirkrichtung (41) erfasst wird, wobei die Winkellage zwischen dem Werkstück (3) und der Spannvorrichtung (1) verändert ist.

18. Verfahren nach Anspruch 17,
**dadurch gekennzeichnet, dass** die Winkellage zwischen dem Werkstück (3) und der Spannvorrichtung (1) durch eine Drehung der Spannvorrichtung (1) um die Spindelachse (15) erfolgt.

19. Verfahren nach einem der Ansprüche 16 bis 18,
**dadurch gekennzeichnet, dass** die Werkstücklage des Werkstücks (3) nach Erfassen der Werkstücklage durch ein Zustellen des mindestens einen Piezoaktors (40) in dem Werkstückaufnahmebereich (20) verändert wird.

20. Verfahren nach einem der Ansprüche 16 bis 19,
**dadurch gekennzeichnet, dass** durch ein Zustellen des mindestens einen Piezoaktors (40) das Werkstück (3) in dem Werkstückaufnahmebereich (20) elastisch und/oder plastisch verformt wird.

21. Verfahren nach einem der Ansprüche 16 bis 20,
**dadurch gekennzeichnet, dass** nach dem Verspannen des Werkstücks (3) die Piezoaktoren (40) die Werkstücklage abfragen bzw. überwachen.

22. Verfahren nach einem der Ansprüche 16 bis 21,
**dadurch gekennzeichnet, dass** nach dem Verspannen des Werkstücks (3) durch das mindestens eine Spannmittel (30) die Piezoaktoren (40) in eine Ausgangstellung verfahren sind.

## Claims

1. Clamping device (1) of a spindle-driven machine tool, comprising a main body (10) which is arranged along a spindle axis (15) and which comprises, on a first side (11), a coupling element (50) and a second side (12) with a work piece reception area (20),
at least one operable clamping means (30), by means of which a work piece (3) can be clamped in the work piece reception area (20) in at least one clamping direction (31), **characterized in that**
the main body (10) comprises at least one piezo actuator (40), **in that** each piezo actuator (40) comprises an effective direction (41) that is directed toward the work piece reception area (20), and **in that** the clamping direction (31) of the at least one clamping means (30) is aligned vertically to the effective direction (41) of the at least one piezo actuator (40).

2. Clamping device (1) in accordance with claim 1,
**characterized in that**
at least one piezo actuator (40) comprises a probe head (42), **in that** the probe head (42) can be pointed into the effective direction (41) by the piezo actuator (40), and **in that** the position of the piezo actuator (40) and/or of the probe head (42) can be read out.

3. Clamping device (1) in accordance with claim 1 or 2,
**characterized in that**
the effective direction (41) of each of the at least one piezo actuator (40) is arranged vertically to the spindle axis (15) and **in that** the effective direction (41) intersects the spindle axis (15).

4. Clamping device (1) in accordance with any of the preceding claims,
**characterized in that**
the at least two, preferably three piezo actuators (40) are arranged around the spindle axis (15) in a circumferentially symmetrical manner.

5. Clamping device (1) in accordance with any of the preceding claims,
**characterized in that**
the main body (10) comprises an interface through which control commands for the piezo actuators (40) can be received and through which the position of the piezo actuator (40) can be transmitted.

6. Clamping device (1) in accordance with any of the preceding claims,
**characterized in that**
the clamping direction (31) of the at least one clamping means (30) is aligned parallel to the longitudinal axis (15).

7. Clamping device (1) in accordance with any of the preceding claims,
**characterized in that**
at least two clamping means (30) are provided that are arranged around the spindle axis (15) in a circumferentially symmetrical manner.

8. Clamping device (1) in accordance with any of the preceding claims,
**characterized in that**
the work piece reception area (20) is implemented for a machining of an inner side or of an outer side of a ring-shaped work piece (3).

9. Clamping device (1) in accordance with any of the preceding claims,
**characterized in that**
at least one clamping means (30) includes a pivot pin (33) which can be rotated around a pivotal axis which is arranged parallel and at a distance to the spindle axis (15).

10. Clamping device (1) in accordance with any of the preceding claims,
**characterized in that**
the pivot pins (33) are coupled by means of a synchronization device (39).

11. Clamping device (1) in accordance with any of the preceding claims,
**characterized in that**
the main body (10) comprises a work piece stop (25) which is implemented as clamping means (30).

12. Clamping device (1) in accordance with any of the preceding claims,
**characterized in that**
the piezo actuator (40) has an actuator direction (45) and **in that** the actuator direction (45) is aligned at an angle of at least 45°, preferably 90° or 180° to the effective direction.

13. Machine tool (2), in particular a lathe or a grinding machine, with a clamping device (1) in accordance with any of the preceding claims.

14. Machine tool (2) in accordance with claim 13,
**characterized in that**
the machine tool (2) comprises a controller, by means of which the piezo actuators (40) of the clamping device (1) can be controlled in the effective direction (41), and **in that** the position of the piezo actuators (40) can be read out.

15. Machine tool (2) in accordance with claim 13,
**characterized in that**
the machine tool (2) and the clamping device (1) comprise means for the transmission of electrical energy from the machine tool (2) to the clamping device (1), and **in that** the machine tool (2) comprises an interface which is configured to communicate with the interface of the clamping device (1).

16. Method for clamping a work piece (3) with a clamping device (1) in accordance with any of claims 1 to 12, **characterized by** the following method steps:
- Positioning of the work piece in the work piece reception area (20) of the clamping device (1),
- Probing the work piece (3) by means of the at least one piezo actuator (40),
- Detecting the position of the at least one piezo actuator (40) and determining the position of the work piece by means of the position of the at least one piezo actuator (40), and
- clamping the work piece (3) in the work piece reception area (20) with the at least one clamping means (30).

17. Method in accordance with claim 16,
**characterized in that**
the work pieces are detected by means of repeated probing of the piezo actuators (40) in the effective direction (41), whereby the angular position between the work piece (3) and the clamping device (1) is changed.

18. Method in accordance with claim 17,
**characterized in that**
the angular positioning between the work piece (3) and the clamping device (1) is carried out by a rotation of the clamping device (1) around the spindle axis (15).

19. Method in accordance with any of claims 16 to 18,
**characterized in that**
the work piece position of the work piece (3) is changed after detecting the work piece position by providing the at least one piezo actuator (40) in the work piece reception area (20).

20. Method in accordance with any of claims 16 to 18,
**characterized in that**
by providing the at least one piezo actuator (40), the work piece (3) in the work piece reception area (20) is elastically or plastically deformed.

21. Method in accordance with any of claims 16 to 20,
**characterized in that**
after clamping the work piece (3) the piezo actuators (40) query and/or monitor the work piece position.

22. Method in accordance with any of claims 16 to 21,
**characterized in that**
after clamping the work piece (3) by means of the at least one clamping means (30) the piezo actuators (40) are returned to an initial position.

## Revendications

1. Dispositif de serrage (1) d'une machine-outil à broche entraînée comprenant :
- un corps de base (10) installé selon l'axe de broche (15) et ayant sur un premier côté (11) un élément de couplage (50) et sur un second côté (12) un moyen de serrage (30) qui permet de serrer une pièce à usiner (3) dans au moins une direction de serrage (31) dans la plage de réception de pièce (20),
dispositif **caractérisé en ce que**
- le corps de base (10) comporte au moins un actionneur piézoélectrique (40),
- l'actionneur piézoélectrique (40) a respectivement une direction d'action (41) orientée vers la zone de réception de pièce (20), et
- la direction de serrage (31) du moyen de serrage (30) est orientée perpendiculairement à la direction d'action (41) de l'actionneur piézoélectrique (40).

2. Dispositif de serrage (1) selon la revendication 1,
**caractérisé en ce que**
l'actionneur piézoélectrique (40) a une tête de palpeur (42),
- la tête de palpeur (42) est réglable dans la direction d'action (41) par l'actionneur piézoélectrique (40), et
- la position de l'actionneur piézoélectrique (40) et/ou de la tête de palpeur (42) sont lisibles.

3. Dispositif de serrage (1) selon la revendication 1 ou 2,
**caractérisé en ce que**
la direction d'action (41) respective de l'actionneur piézoélectrique (40) est perpendiculaire à l'axe de broche (15), et
la direction d'action (41) coupe l'axe de broche (15).

4. Dispositif de serrage (1) selon l'une des revendications précédentes, **caractérisé en ce que**
au moins deux et de préférence trois actionneurs piézoélectriques (40) sont répartis selon une symétrie de rotation autour de l'axe de broche (15).

5. Dispositif de serrage (1) selon l'une des revendications précédentes, **caractérisé en ce que**
le corps de base (10) a une interface qui peut recevoir les commandes des actionneurs piézoélectriques (40) et par laquelle est envoyée la position de l'actionneur piézoélectrique (40).

6. Dispositif de serrage (1) selon l'une des revendications précédentes, **caractérisé en ce que**
la direction de serrage (31) du moyen de serrage (30) est parallèle à l'axe longitudinal (15).

7. Dispositif de serrage (1) selon l'une des revendications précédentes, **caractérisé en ce qu'**il comporte
au moins deux moyens de serrage (30) qui sont répartis selon une symétrie de rotation autour de l'axe de broche (15).

8. Dispositif de serrage (1) selon l'une des revendications précédentes, **caractérisé en ce que**
la zone de réception de pièce (20) pour l'usinage est réalisée du côté intérieur ou du côté extérieur d'une pièce de forme annulaire (3).

9. Dispositif de serrage (1) selon l'une des revendications précédentes, **caractérisé en ce que**
le moyen de serrage (30) comprend un goujon pivotant (33) qui peut tourner autour d'un axe de pivotement (34) parallèle à l'axe de broche (15) et écarté de celui-ci.

10. Dispositif de serrage (1) selon l'une des revendications précédentes, **caractérisé en ce que**
les goujons pivotants (33) sont couplés à une installation de synchronisation (39).

11. Dispositif de serrage (1) selon l'une des revendications précédentes, **caractérisé en ce que**
le corps de base (10) comporte une butée de pièce (25) réalisée comme moyen de serrage (30).

12. Dispositif de serrage (1) selon l'une des revendications précédentes, **caractérisé en ce que**
l'actionneur piézoélectrique (40) a une direction d'actionnement (45) et, la direction d'actionnement (45) fait un angle par rapport à la direction d'action d'au moins 45°, de préférence de 90° ou de 180°.

13. Machine-outil (2), notamment tour à usiner ou meuleuse comportant un dispositif de serrage (1) selon l'une des revendications précédentes.

14. Machine-outil (2) selon la revendication 13,
**caractérisée en ce que**
elle (2) comporte une commande qui permet de commander les actionneurs piézoélectriques (40) du dispositif de serrage (1) dans la direction d'action (41) et la position des actionneurs piézoélectriques (40) est lisible.

15. Machine-outil selon la revendication 13,
**caractérisée en ce que**
la machine-outil (2) et le dispositif de serrage (1) ont des moyens pour transmettre l'énergie électrique de la machine-outil (2) au dispositif de serrage (1), et
la machine-outil (2) a une interface conçue pour communiquer avec l'interface du dispositif de serrage (1).

16. Procédé pour serrer une pièce (3) à l'aide d'un dispositif de serrage (1) selon l'une des revendications 1 à 12,
procédé **caractérisé par** les étapes suivantes consistant à :
- positionner la pièce dans la zone de réception de pièce (20) du dispositif de serrage (1),
- palper la pièce (3) à l'aide d'au moins un actionneur piézoélectrique (40),
- saisir la position d'au moins un actionneur piézoélectrique (40) et déterminer la position de la pièce à l'aide de la position de cet actionneur piézoélectrique (40), et
- serrer la pièce (3) dans la zone de réception de pièce (20) à l'aide d'au moins un moyen de serrage (30).

17. Procédé selon la revendication 16,
**caractérisé en ce que**
- on saisit la position de la pièce en palpant de manière répétée avec les actionneurs piézoélectriques (40) dans la direction d'action (41), et
- on fait varier l'angle entre la pièce (3) et le dispositif de serrage (1).

18. Procédé selon la revendication 17,
**caractérisé en ce que**
la position angulaire entre la pièce (3) et le dispositif de serrage (1) s'obtient en faisant tourner le dispositif de serrage (1) autour de l'axe de broche (15).

19. Procédé selon l'une des revendications 16 à 18,
**caractérisé en ce que**
on modifie la position de la pièce (3) avec avoir saisi la position de la pièce en modifiant le réglage en rapprochant au moins un actionneur piézoélectrique (40) dans la plage de réception de pièce (20).

20. Procédé selon l'une des revendications 16 à 19,
**caractérisé en ce que**
en rapprochant au moins un actionneur piézoélectrique (40) on déforme la pièce (3) de manière élastique et/ou plastique dans la zone de réception de pièce (20).

21. Procédé selon l'une des revendications 16 à 20,
**caractérisé en ce que**
après le serrage de la pièce (3) les actionneurs piézoélectriques (40) surveillent ou interrogent la position de la pièce.

22. Procédé selon l'une des revendications 16 à 21,
**caractérisé en ce que**
après le serrage de la pièce (3) à l'aide d'au moins un moyen de serrage (30), on déplace les actionneurs piézoélectriques (40) en position de repos.
